Europäisches Patentamt

(19) European Patent Office

Office européen des brevets

(11) Numéro de publication : **0 110 774**
**B1**

(12) **FASCICULE DE BREVET EUROPÉEN**

(45) Date de publication du fascicule du brevet :
04.03.87

(21) Numéro de dépôt : 83402249.3

(22) Date de dépôt : 22.11.83

(51) Int. Cl.⁴ : **F 42 B 15/033, B 64 C 15/14**

(54) **Système pour le pilotage d'un missile au moyen de jets gazeux latéraux.**

(30) Priorité : 29.11.82 FR 8219996

(43) Date de publication de la demande :
**13.06.84 Bulletin 84/24**

(45) Mention de la délivrance du brevet :
**04.03.87 Bulletin 87/10**

(84) Etats contractants désignés :
**BE CH DE GB IT LI NL SE**

(56) Documents cités :
EP-A- 0 063 979
EP-A- 0 068 972
GB-A- 1 185 193

(73) Titulaire : **AEROSPATIALE Société Nationale Industrielle**
**37 boulevard de Montmorency**
**F-75781 Paris Cédex 16 (FR)**

(72) Inventeur : **Raynaud, Jacques**
**64 rue René Legros**
**F-91600 Savigny-sur-Orge (FR)**
Inventeur : **Jolivet, Pierre**
**29 avenue Lénine**
**F-94110 Arcueil (FR)**
Inventeur : **Darmois, Jean**
**45 avenue du Panorama**
**F-92340 Bourg-La-Reine (FR)**
Inventeur : **Guillot, Jean**
**74 avenue des Quatre Chemins**
**F-92290 Chatenay-Malabry (FR)**

(74) Mandataire : **Bonnetat, Christian et al**
**Cabinet PROPI Conseils 23 rue de Léningrad**
**F-75008 Paris (FR)**

## Description

La présente invention concerne un système pour le pilotage d'un missile au moyen de jets gazeux latéraux.

Il est déjà connu, par exemple par les documents GB-A-1 185 193 et EP-A-0 063 979, de prévoir à bord d'un missile des tuyères latérales, susceptibles d'être alimentées en gaz à partir soit d'un générateur de gaz du propulseur principal, soit d'un générateur de gaz spécialement prévu à cet effet.

Plus précisément, le document EP-A-0 063 979 décrit un système pour le pilotage d'un missile au moyen de jets gazeux, comportant selon le préambule de la revendication 1 un générateur de gaz relié à au moins une tuyère latérale, associée à un obturateur mobile commandant le passage des gaz à travers ladite tuyère, ladite tuyère présentant une section oblongue, dont la plus grande dimension est contenue, de façon au moins approximative dans un plan passant par l'axe longitudinal dudit missile, tandis que la plus petite dimension de ladite section oblongue est dirigée, au moins approximativement, transversalement à ce plan.

Ainsi, dans ces systèmes de pilotage, les jets de gaz latéraux engendrent donc des forces propulsives transversales aptes à infléchir de façon rapide et importante la trajectoire du missile. On peut faire en sorte que les lignes d'action de telles forces transversales passent par le centre de gravité du missile, ou tout au moins au voisinage de ce centre de gravité et l'on dit alors que le missile est piloté en force, le temps de réponse à la commande étant alors particulièrement rapide. Cependant, ceci n'est pas une obligation et les lignes d'action desdites forces transversales peuvent passer en des points de l'axe du missile différents du centre de gravité. Lesdites forces transversales créent alors, de façon semblable à des gouvernes aérodynamiques classiques, des moments permettant la commande du missile en attitude par rapport au centre de gravité.

Les systèmes pour le pilotage de missiles au moyen de jets gazeux latéraux sont, notamment à cause de leur faible temps de réponse, particulièrement avantageux. Cependant, ils présentent un inconvénient important. En effet, lors de leur fonctionnement, il se produit des interférences entre, d'une part, l'écoulement aérodynamique longitudinal, supersonique ou subsonique, autour du missile, engendré par le déplacement de celui-ci et, d'autre part, le ou les jets gazeux latéraux, engendrés par ledit système de pilotage. Il peut en résulter notamment l'apparition d'écoulements induits parasites, le décollement de l'écoulement aérodynamique du fuselage, en arrière desdites tuyères, ainsi que l'inflexion vers l'arrière des jets gazeux latéraux, leur élargissement et leur éclatement transversalement à l'axe du missile. Par suite :

La stabilité aérodynamique du missile peut varier considérablement suivant que le vol de celui-ci s'effectue avec ou sans jets de pilotage latéraux, de sorte que la commande dudit missile en est fortement influencée ;

Lorsque, de façon usuelle, le missile comporte des ailes, des empennages et/ou des gouvernes disposés vers sa partie arrière, en vue de lui conférer une certaine portance et de permettre un pilotage aérodynamique combiné audit pilotage par jets gazeux latéraux, il peut arriver non seulement que l'écoulement aérodynamique n'atteigne plus ces surfaces aérodynamiques de sorte que la portance et la manœuvrabilité aérodynamique du missile en sont affectées au point de devenir nulles, mais encore que ce soit les jets gazeux latéraux infléchis qui atteignent ces surfaces aérodynamiques, de sorte que les conditions de vol du missile sont totalement perturbées, au point que celui-ci peut devenir ingouvernable.

La présente invention a pour objet de remédier à ces inconvénients.

A cette fin, selon l'invention, le système pour le pilotage d'un missile au moyen de jets gazeux, comportant un générateur de gaz relié à au moins une tuyère latérale, associée à un obturateur mobile commandant le passage des gaz à travers ladite tuyère, ladite tuyère présentant une section oblongue, dont la plus grande dimension est contenue, de façon au moins approximative dans un plan passant par l'axe longitudinal dudit missile, tandis que la plus petite dimension de ladite section oblongue est dirigée, au moins approximativement, transversalement à ce plan, est caractérisé en ce que la section de la tuyère est telle que le jet de pilotage latéral qu'elle émet présente la forme d'une nappe ayant une faible dimension transversale par rapport audit axe longitudinal du missile et donc une faible dimension frontale pour l'écoulement aérodynamique autour dudit missile.

Ainsi, ladite tuyère engendre un jet gazeux plat, en forme de nappe à faible section transversalement à l'axe du missile. Par suite, l'élargissement de ce jet par l'écoulement aérodynamique a moins d'effet, puisque le jet élargi résultant est beaucoup moins large que lorsque les tuyères sont de dimensions longitudinale et transversale comparables. De plus, le décollement de l'écoulement aérodynamique par ledit jet transversal est beaucoup plus localisé et donc moindre. Il en résulte que les effets des interactions entre l'écoulement aérodynamique et le ou les jets gazeux latéraux sont réduits.

Par ailleurs, dans le cas usuel où le missile comporte des éléments aérodynamiques tels que des ailes, des empennages et/ou des gouvernes disposés en arrière de ladite tuyère, il est avantageux de disposer ladite tuyère de façon qu'elle se trouve dans une position périphérique angulaire intermédiaire entre les positions périphériques angulaires d'au moins lesdits éléments aérodynamiques les plus proches de ladite tuyère, de sorte que le jet plat qui en sort passe entre deux de ceux-ci. Ainsi, on élimine l'effet de masque engendré par les jets latéraux sur lesdits éléments aérodynamiques, en ce qui concerne l'écoulement aérodynamique.

Lorsque le missile comporte une pluralité de tels éléments aérodynamiques angulairement équirépartis à sa périphérie, il peut comporter plusieurs tuyères diamétralement opposées et disposées dans des positions angulaires médianes par rapport à deux desdits éléments aérodynamiques consécutifs, les plus proches desdites tuyères.

Afin de réduire encore plus l'aplatissement et/ou l'éclatement du jet gazeux latéral par l'écoulement aérodynamique, il peut être avantageux de prévoir que la tuyère, éventuellement associée à des moyens aérodynamiques tels que étrave ou aile nageoire, soit en saillie par rapport au fuselage du missile, de façon à prolonger le guidage dudit jet gazeux latéral à l'extérieur du missile.

On remarquera de plus que la forme oblongue de la tuyère facilite la conception d'un obturateur de petite dimension, de sorte que les amplitudes des mouvements de cet obturateur peuvent être limitées, les efforts et les temps de manœuvre pouvant donc être très réduits. Un tel obturateur, de préférence rotatif, se trouve du côté du col de la tuyère, extérieurement à celle-ci. Chaque tuyère peut être constituée d'un divergent, par exemple formé d'une surface réglée, reliant une section d'entrée et une section de sortie oblongues semblables. L'axe de l'obturateur rotatif est alors avantageusement parallèle à la plus grande dimension de la section d'entrée du divergent.

Les figures du dessin annexé feront bien comprendre comment l'invention peut être réalisée.

La figure 1 est une coupe longitudinale schématique d'un missile selon l'invention.

La figure 2 est une coupe transversale schématique du missile selon l'invention, suivant la ligne II-II de la figure 1.

La figure 3 est une vue en perspective schématique du divergent d'une tuyère selon l'invention.

La figure 4 est une vue partielle et schématique d'une variante de réalisation du missile selon l'invention.

La figure 5 est une vue de face partielle du missile de la figure 4.

La figure 6 montre, en vue partielle schématique, une autre variante de réalisation du missile selon l'invention.

La figure 7 est une vue en coupe schématique d'une tuyère et de son mécanisme de commande associé.

La figure 8 est une coupe partielle selon la ligne VIII-VIII de la figure 7 montrant la tuyère en position ouverte.

La figure 9 est une coupe partielle selon la ligne VIII-VIII de la figure 7 montrant la tuyère en position fermée.

La figure 10 est une vue selon la flèche X de la figure 7.

La figure 11 est une vue en coupe montrant deux tuyères diamétralement opposées en position neutre.

Sur ces figures, des références identiques désignent des éléments semblables.

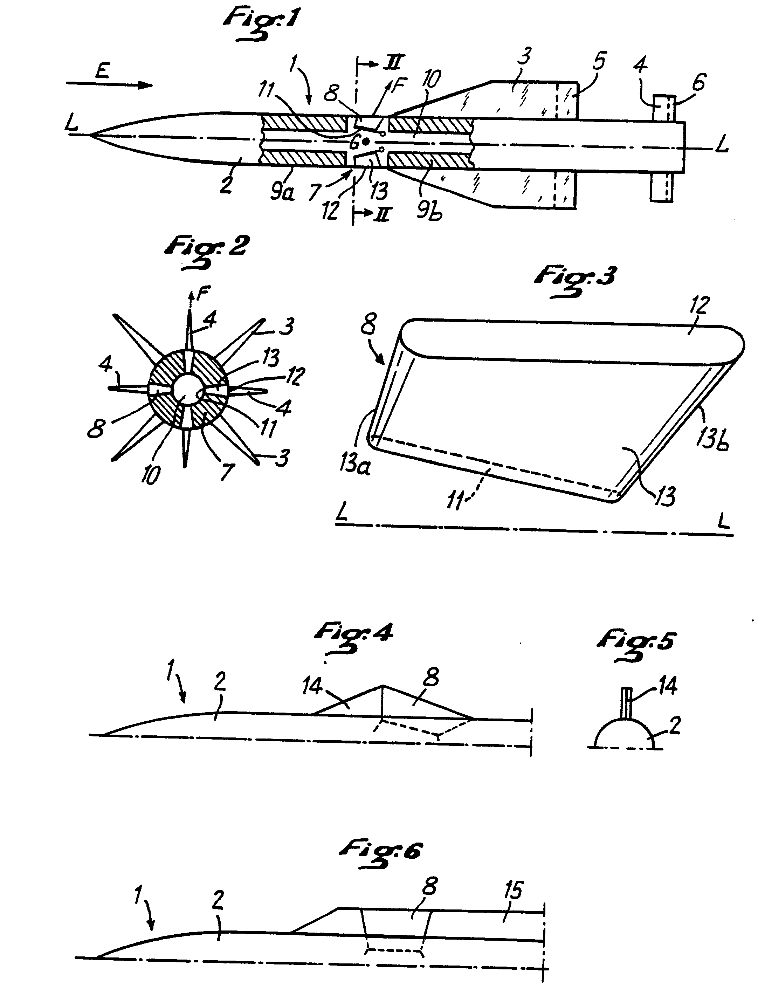

L'exemple de réalisation du missile 1 selon l'invention, montré schématiquement sur les figures 1 et 2, comporte un corps allongé 2 d'axe L-L pourvu d'ailes 3 et d'empennages 4. Les ailes 3 et les empennages 4 sont pourvus de gouvernes 5 et 6, respectivement. Les ailes 3 sont au nombre de quatre et elles sont deux à deux diamétralement opposées, les plans de deux ailes opposées étant orthogonaux entre eux et passant par l'axe L-L. De même, les empennages 4 sont au nombre de quatre et ils sont deux à deux diamétralement opposés, les plans de deux empennages opposés étant orthogonaux entre eux et passant par l'axe L-L. De plus, les empennages 4 se trouvent dans les plans bissecteurs des ailes 3.

Au voisinage du centre de gravité G du missile 1, est prévu, dans le corps 2, un bloc de pilotage en force 7 comportant quatre tuyères 8, deux à deux diamétralement opposées et disposées dans les plans bissecteurs des ailes 3. Les tuyères 8 sont placées entre les deux chambres de combustion 9a et 9b d'un générateur de gaz, par exemple à propergol solide, et sont reliées auxdites chambres 9a et 9b, par des conduits 10. Cette disposition présente l'avantage que le combustible des chambres 9a et 9b peut être consommé de façon symétrique, pour que le centre de gravité du missile 1 reste toujours sensiblement au point G pendant le fonctionnement du générateur de gaz 9a, 9b.

Les tuyères 8 sont en liaison avec les conduits 10 par un orifice d'entrée ou col 11 et débouchent à l'extérieur par un orifice de sortie 12, de plus grande section que l'orifice d'entrée 11, lesdits orifices 11 et 12 étant reliés par un divergent 13.

Chacune des tuyères 8 est équipée, au niveau de son orifice d'entrée 11, d'un organe d'obturation mobile (non représenté sur les figures 1 et 2) permettant d'obturer ou au contraire de dégager la tuyère correspondante.

En vol sans facteur de charge important, l'action du bloc de pilotage en force 7 n'est pas forcément nécessaire, car alors le missile 1 peut être piloté de façon classique grâce à ses gouvernes aérodynamiques 5 et 6. Par suite, si le générateur de gaz 9a, 9b est de type à fonctionnement commandé, il peut être à l'arrêt. Si le générateur de gaz 9a, 9b est du type à fonctionnement continu, les gaz qu'il produit peuvent être aiguillés vers le circuit des gaz du propulseur principal (non représenté) du missile 1, pour participer à la poussée axiale de ce dernier ; en variante, les organes d'obturation de deux tuyères opposées peuvent être commandés pour que les jets de gaz qu'elles émettent exercent sur le missile des forces dont la résultante est nulle : par exemple, les organes d'obturation des deux tuyères opposés sont alternativement ouverts et fermés, de façon qu'une tuyère soit active lorsque l'autre est inactive et vice-versa, ou bien encore ces organes d'obturation sont constamment à demi-ouverts pour laisser échapper les gaz produits par le générateur 9a, 9b.

En revanche, en vol avec facteur de charge important imposant un brusque changement d'orientation de la trajectoire du missile, il est nécessaire de faire fonctionner à plein au moins l'une des tuyères 8, pour obtenir ce brusque changement d'orientation. Lorsque l'organe d'obturation de la ou des tuyères commandées au fonctionnement est complètement effacé, le ou les jets gazeux latéraux et transversaux F émis sont importants et interagissent avec l'écoulement aérodynamique E autour du missile 1.

Si, comme dans les systèmes connus, l'orifice de sortie 12 des tuyères 8 était de forme circulaire, carrée ou rectangulaire presque carrée, c'est-à-dire présentait transversalement à l'axe L-L du missile une dimension importante, il résulterait de cette interaction le décollement de l'écoulement E du fuselage du missile 1 par le ou les jets F et l'aplatissement, l'éclatement et l'incurvation vers l'arrière du missile 1 du ou des jets F par l'écoulement E. Par suite, d'une part, la stabilité de vol du missile 1 en serait affectée et, d'autre part, les ailes 3, disposées tout de suite en arrière des tuyères 8 et quoique angulairement écartées de celles-ci, seraient masquées à l'écoulement aérodynamique E par les jets de pilotage F, et pourraient être sensibles à ceux-ci, de sorte que la portance desdites ailes 3 et l'action de leurs gouvernes 5 seraient annulées ou fortement perturbées. De même, l'empennage 4 et leurs gouvernes 6, disposés loin derrière les tuyères 8, mais dans l'axe de celles-ci, seraient pour le moins masqués à l'écoulement E. Dans ces conditions, le missile 1 pourrait devenir impilotable.

Aussi, selon l'invention, pour éviter ces inconvénients, les tuyères 8 présentent avantageusement la forme montrée par la figure 3. L'orifice de sortie 12 est de forme oblongue, la grande dimension de sa section étant parallèle à l'axe longitudinal L-L du missile 1, tandis que la petite dimension de cette section est transversale audit axe L-L. Cette petite dimension transversale peut être constante et les extrémités de l'orifice de sortie 12 peuvent être arrondies.

L'orifice d'entrée ou col 11, situé du côté intérieur du missile 1, est également de forme oblongue, de largeur constante et à extrémités arrondies. La section dudit col 11 est semblable à celle de l'orifice de sortie 12, mais plus petite que celle de cette dernière. Le divergent 13 se raccorde aux deux orifices 11 et 12 par une surface réglée.

Le rapport de section nécessaire pour détendre suffisamment les gaz de combustion provenant du générateur 9a, 9b s'obtient en grande partie par détermination des largeurs respectives des orifices 11 et 12. Cependant, si comme montré sur les figures 1 et 3, l'orifice de sortie 12 est parallèle à l'axe L-L, alors que l'orifice d'entrée 11 est incliné par rapport à cet axe, l'écart de longueur de ces deux orifices contribue également à l'obtention du rapport de détente.

L'inclinaison de l'orifice d'entrée 11 et des bords extrêmes 13a et 13b du divergent 13 a notamment pour but d'incliner vers l'arrière du missile les jets latéraux F, de façon que ceux-ci engendrent, si nécessaire, une poussée présentant, en plus d'une composante transversale pour le pilotage en force, une composante axiale participant à la propulsion du missile 1. Il en résulte alors que la longueur du divergent 13 croît de l'avant vers l'arrière 7 c'est-à-dire du bord extrême 13a au bord extrême 13b.

Grâce à la structure oblongue des tuyères 8, les jets de pilotage latéraux F présentent la forme de nappes ayant une faible dimension frontale pour l'écoulement aérodynamique E. Par suite, les interactions mentionnées ci-dessus sont, sinon totalement supprimées, du moins suffisamment réduites pour ne plus engendrer d'effets nuisibles, de sorte que les éléments aérodynamiques 3, 4, 5 et 6 peuvent continuer à remplir leur fonction en coopérant avec l'écoulement E, même lorsque les jets latéraux de pilotage F sont utilisés à leur puissance maximale.

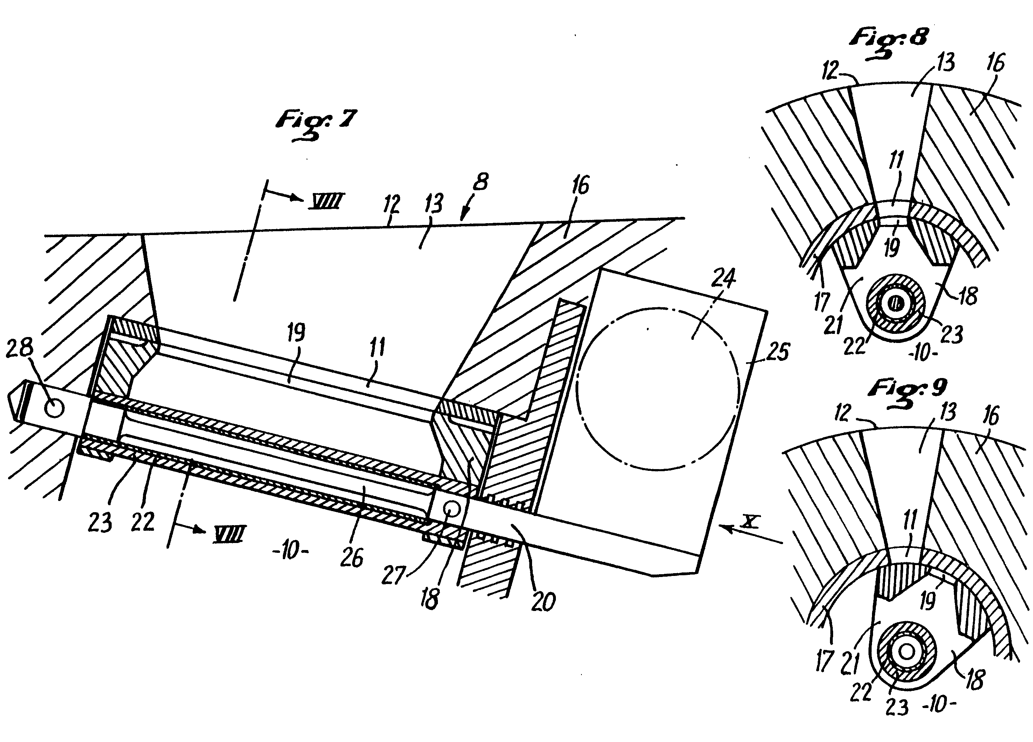

Sur les figures 1 et 2, on a supposé que les orifices de sortie 12 des tuyères 8 se trouvaient au niveau de la peau du fuselage du missile 1. Cependant, pour réduire encore plus les interactions entre l'écoulement E et les jets latéraux F, il peut être avantageux dans certains cas de guider lesdits jets latéraux F au-delà de la peau du fuselage du missile 1. Par exemple, comme illustré schématiquement sur les figures 4, 5 et 6, les tuyères 8 peuvent faire saillie vers l'extérieur par rapport au fuselage du missile 1. Dans le cas des figures 4 et 5, on a prévu une étrave 14 pour minimiser les perturbations engendrées dans l'écoulement E par lesdites tuyères 8 saillantes. Dans le cas de la figure 6, on a incorporé les tuyères 8 à des ailes nageoires 15 existantes sur le missile 1.

Les orifices 11 et 12 et les divergents 13 des tuyères 8 sont ménagés dans une structure 16 du missile 1, qui résiste à la pression des gaz et dans laquelle est agencé un boisseau 17 pour un obturateur rotatif 18. Le boisseau 17 et l'obturateur 18 se trouvent du côté de l'orifice d'entrée 11 opposé au divergent 13 et sont coaxiaux.

L'obturateur rotatif 18 présente la forme d'un segment de cylindre évidé et sa paroi cylindrique extérieure comporte une fente 19, de forme identique à celle de l'orifice 11. Il peut pivoter autour d'un axe 20 supporté par des paliers de façon soit à amener la fente 19 en coïncidence totale ou partielle avec l'orifice 11, (figures 8 et 11), soit à obturer ledit orifice 11 (figure 9). Dans la position des figures 8 et 11, les gaz émis par le générateur 9a, 9b et éjectés dans les conduits 10, sont transmis au divergent 13 des tuyères 8 à travers la partie évidée 21 et la fente 19 de l'obturateur 18.

La paroi cylindrique des obturateurs 18 possède un jeu minimal par rapport au boisseau 17 afin de réduire les frottements, ainsi que les fuites en position fermée (figure 9), tout en autorisant les dilatations provoquées par la température élevée des gaz, par exemple lorsque ceux-ci proviennent d'un générateur de gaz 9a, 9b du type à poudre. Le choix des matériaux constitutifs du boisseau 17 et de l'obturateur 18 ainsi que le choix de leur forme peuvent contribuer également à la minimisation des frottements : on utilise par exemple du carbone, du molybdène, protégés ou non par des revêtements ou manchons de protection thermique (voir le revêtement 22 et le manchon 23 sur les figures 7, 8 et 9).

Le rayon de l'obturateur 18 est réduit de manière à ce que celui-ci présente une inertie de rotation et un débattement de manœuvre très faibles, de façon à obtenir un temps de réponse très court avec une puissance de commande minimale. Les formes en sont telles que la résultante des forces qui s'exercent sur ledit obturateur passe sensiblement par l'axe de rotation de façon à minimiser au maximum les forces de manœuvre.

Les moyens de commande peuvent être constitués par un oscillateur électromécanique à fréquence propre élevée, disposé à l'extérieur des chambres d'alimentation des tuyères. Cet oscillateur peut être constitué, par exemple, d'électro-aimants 24 antagonistes qui provoquent la rotation de l'axe 20 par attraction et collage d'une palette 25 en matériau magnétique solidaire dudit axe 20.

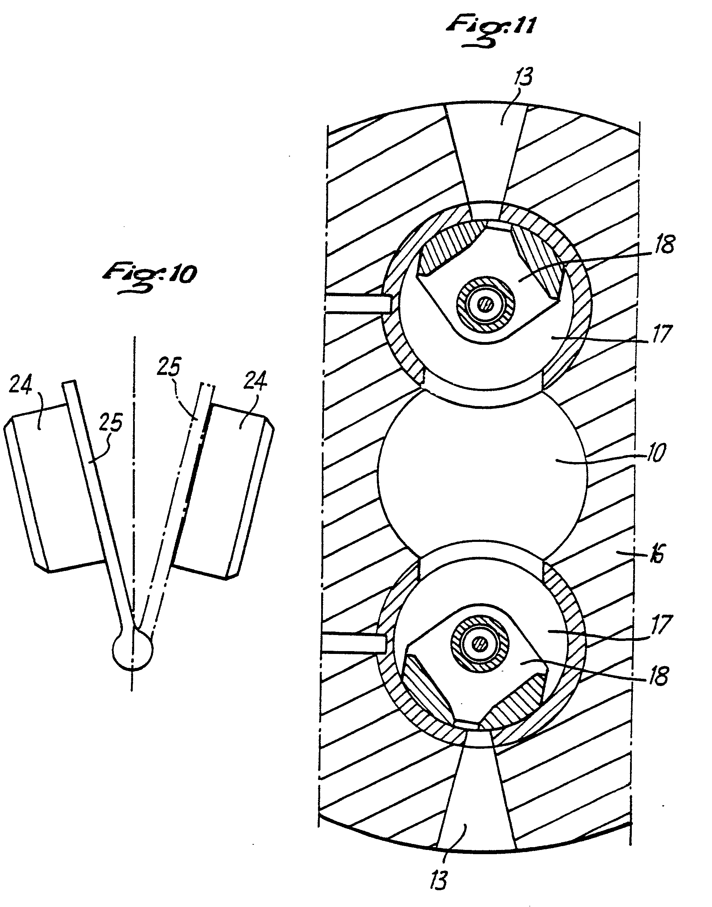

L'action des électro-aimants 24 peut s'effectuer à l'encontre de l'action d'un élément élastique exerçant un couple de rappel. Dans l'exemple de réalisation de la figure 7, une barre de torsion 26, protégée par le manchon 23 et son revêtement 22, est solidaire à ses extrémités en 27 de l'axe 20 et en 28 de la structure 16. Cet élément élastique peut imposer à l'obturateur 18, en l'absence d'action des électro-aimants, une position neutre. Par exemple, les deux positions de la palette 25 collée à un électro-aimant 24 (figure 10) peuvent respectivement correspondre à l'ouverture et à la fermeture de l'obturateur 18 telles qu'illustrées sur les figures 8 et 9, tandis que la position neutre imposée par l'élément élastique 26 peut correspondre à une ouverture partielle de l'obturateur 18, telle que montrée par la figure 11. Comme mentionné ci-dessus, une telle ouverture partielle est utilisée pour permettre l'évacuation des gaz engendrés par le générateur 9a, 9b tout en inhibant l'action des tuyères 8.

Dans un mode de réalisation avantageux, l'élément élastique est constitué par un palier élastomère lamifié faisant étanchéité au niveau du palier de sortie, en assurant tout ou partie du rappel élastique.

## Revendications

1. Système (7) pour le pilotage d'un missile (1) au moyen de jets gazeux (F), comportant un générateur de gaz (9a, 9b) relié à au moins une tuyère latérale (8), associée à un obturateur mobile (18) commandant le passage des gaz à travers ladite tuyère (8), ladite tuyère (8) présentant une section oblongue, dont la plus grande dimension est contenue, de façon au moins approximative dans un plan passant par l'axe longitudinal (L-L) dudit missile (1), tandis que la plus petite dimension de ladite section oblongue est dirigée, au moins approximativement, transversalement à ce plan, caractérisé en ce que la section de la tuyère (8) est telle que le jet de pilotage latéral (F) qu'elle émet présente la forme d'une nappe ayant une faible dimension transversale par rapport audit axe longitudinal (L-L) du missile et donc une faible dimension frontale pour l'écoulement aérodynamique (E) autour dudit missile.

2. Système selon la revendication 1, pour un missile (1) comportant des éléments aérodynamiques tels que ailes (3), empennages (4) et/ou gouvernes (5, 6), disposés en arrière ou au niveau de ladite tuyère (8), caractérisé en ce que la position périphérique angulaire de la tuyère (8) est intermédiaire entre les positions périphériques angulaires d'au moins les éléments aérodynamiques (3, 5) les plus proches de ladite tuyère.

3. Système selon la revendication 2, comportant une pluralité de tels éléments aérodynamiques (3, 4, 5, 6) angulairement équirépartis à sa périphérie, caractérisé en ce qu'il comporte plusieurs tuyères (8) deux à deux diamétralement opposées et disposées chacune dans des positions angulaires médianes par rapport à deux desdits éléments aérodynamiques (3, 5) consécutifs, les plus proches desdites tuyères.

4. Système selon l'une quelconque des revendications 1 à 3, caractérisé en ce que ladite tuyère est en saillie par rapport au fuselage du missile (1), afin de prolonger le guidage du jet (F) à l'extérieur de celui-ci.

5. Système selon la revendication 4, caractérisé en ce que ladite tuyère (8) en saillie est associée et/ou incorporée à des éléments aérodynamiques (14, 15) de la paroi du missile.

6. Système selon l'une quelconque des revendications précédentes, caractérisé en ce que la tuyère (8) comporte un divergent (13) dont les sections d'entrée (11) et de sortie (12) sont obliques et raccordées par une paroi réglée.

7. Système selon l'une des revendications précédentes, caractérisé en ce que l'obturateur mobile (18) se trouve au niveau de la section d'entrée (11) de la tuyère, du côté de cette section d'entrée opposé au divergent (13) et de section proche de la section d'entrée.

8. Système selon la revendication 7, caractérisé en ce que l'obturateur mobile (18) est rotatif autour d'un axe (20) parallèle à la plus grande dimension de la section d'entrée (11).

9. Système selon la revendication 6, caractérisé en ce que les sections d'entrée (11) et de sortie (12) sont semblables, mais disposées dans des plans non parallèles l'un à l'autre.

## Claims

1. System (7) for piloting a missile (1) by means of gaseous jets (F), comprising a gas generator (9a, 9b) connected to at least one lateral nozzle (8) associated with a mobile blanking means (18) controlling passage of the gases through said nozzle (8), said nozzle (8) presenting an oblong section whose largest dimension is contained at least approximately in a plane passing through the longitudinal axis (L-L) of said missile (1), whilst the smallest dimension of said oblong section is directed at least approximately transversaly to this plane, characterized in that the section of the nozzle (8) is such that the lateral piloting jet (F) emitted by the nozzle presents the form of a sheet having a small transversal dimension with respect to said longitudinal axis (L-L) of the missile and thus a small frontal dimension for the aerodynamic flow around said missile.

2. System according to claim 1, for a missile (1) comprising aerodynamic elements such as wings (3), stabilizers (4) and/or control surfaces (5, 6), disposed to the rear of or level with said nozzle (8), characterized in that the angular peripheral position of the nozzle (8) is intermediate between the angular peripheral positions of at least the aerodynamic elements (3, 5) closest to said nozzle.

3. System according to claim 2, comprising a plurality of such aerodynamic elements (3, 4, 5, 6) angularly distributed equally on its periphery, characterized in that it comprises a plurality of nozzles (8) diametrically opposite in two's and each disposed in angular positions with are median with respect to two of said consecutive aerodynamic elements (3, 5), closest to said nozzles.

4. System according to any one of claims 1 to 3, characterized in that said nozzle projects with respect to the fuselage of the missile (1), in order to extend guiding of the jet (F) outside said missile.

5. System according to claim 4, characterized in that said projecting nozzle (8) is associated with and/or incorporated in aerodynamic elements (14, 15) on the wall of the missile.

6. System according to any one of the preceding claims, characterized in that the nozzle (8) comprises a divergent (13) whose inlet (11) and outlet (12) sections are oblique and connected by a ruled surface.

7. System according to any one of the preceding claims, characterized in that the mobile blanking means (18) lies level with the inlet section (11) of the nozzle on the side of this inlet section opposite the divergent (13) and whose section is close to the inlet section.

8. System according to claim 7, characterized in that the mobile blanking means (18) is rotatable about an axis (20) parallel to the larger dimension of the inlet section (11).

9. System according to claim 6, characterized in that the inlet (11) and outlet (12) sections are similar, but disposed in planes not parallel to each other.

**Patentansprüche**

1. System (7) zum Steuern eines Flugkörpers (1) mittels gasförmiger Strahlen (F), das einen Gasgenerator (9a, 9b) enthält, der an mindestens eine seitliche Düse (8) angeschlossen ist, die mit einer beweglichen Verschließvorrichtung (18) verbunden ist, welche den Gasdurchfluß durch diese Düse (8) reguliert, wobei diese Düse (8) einen länglichen Schnitt aufweist, dessen größte Abmessung mindestens annähernd auf einer Ebene liegt, die entlang der Längsachse (L-L) des Flugkörpers (1) verläuft, während die kleinste Abmessung dieses länglichen Schnitts mindestens annähernd quer zu dieser Ebene ausgerichtet ist, dadurch gekennzeichnet, daß die Düse (8) einen solchen Schnitt aufweist, daß der von ihr ausgestoßene Strahl (F) zur seitlichen Feinsteuerung die Form einer Schrägfläche mit einer in bezug auf die Längsachse (L-L) des Flugkörpers geringen Querausdehnung und damit eine geringe Frontalausdehnung für die aerodynamische Strömung (E) um den Flugkörper herum hat.

2. System nach Anspruch 1 für einen Flugkörper (1) mit aerodynamischen Elementen wie Flügeln (3), Leitwerken (4) und/oder Steuerflächen (5, 6) die hinter der oder auf der gleichen Ebene wie die Düse angeordnet sind, dadurch gekennzeichnet, daß die peripherische Winkelstellung der Düse (8) zwischen den peripherischen Winkelstellungen zumindest der der Düse am nächsten angeordneten aerodynamischen Elemente (3, 5) liegt.

3. System nach Anspruch 2 mit einer Vielzahl derartiger aerodynamischer Elemente (3, 4, 5, 6), die winkelförmig gleichmäßig auf seinem Umfang verteilt sind, dadurch gekennzeichnet, daß es mehrere Düsen (8) je zu zweit diametral gegenüberliegend und jede in winkelförmigen Mittelstellungen in bezug aus zwei nachfolgenden, den Düsen am nächsten angeordneten aerodynamischen Elemente (3, 5) angeordnet aufweist.

4. System nach einem der Ansprüche 1 bis 3, dadurch gekennzeichnet, daß die Düse in bezug auf den Rumpf des Flugkörpers (1) vorsteht, um die Lenkung des Strahls (F) außerhalb desselben zu verlängern.

5. System nach Anspruch 4, dadurch gekennzeichnet, daß die vorstehende Düse (8) mit aerodynamischen Elementen (14, 15) in der Wand des Flugkörpers verbunden und/oder in sie eingebaut ist.

6. System nach einem der vorangehenden Ansprüche, dadurch gekennzeichnet, daß die Düse (8) ein divergierendes Element (18) aufweist, dessen Einlaß (11)- und Auslaß (12)-Abschnitte schräg verlaufen und durch eine regulierte Seitenwand verbunden sind.

7. System nach einem der vorangehenden Ansprüche, dadurch gekennzeichnet, daß die bewegliche Verschließvorrichtung (18) auf der Höhe des Einlaßabschnittes (11) der Düse liegt, von der Seite des Einlaßabschnittes her gegenüber dem divergierenden Element (13), und mit einem Abschnitt nahe dem Einlaßabschnitt.

8. System nach Anspruch 7, dadurch gekennzeichnet, daß die bewegliche Verschließvorrich-

11     **0 110 774**     12

tung (18) um eine Achse (20) drehbar ist,die parallel zur größten Abmessung des Einlaßabschnittes (11) verläuft.

9. System nach Anspruch 6, dadurch gekennzeichnet, daß die Einlaß (11)- und Auslaß (12)-Abschnitte sich gleichen, aber auf nicht miteinander parallel verlaufenden Ebenen angeordnet sind.

Fig.1

Fig.2

Fig.3

Fig.4

Fig.5

Fig.6

*Fig: 7*

*Fig: 8*

*Fig: 9*

0 110 774

*Fig:11*

*Fig:10*